# EUROPÄISCHE PATENTANMELDUNG

(11) **EP 2 708 832 A1**
(43) Veröffentlichungstag der Anmeldung: **19.03.2014**
(21) Anmeldenummer: 12184095.3
(22) Anmeldetag: 12.09.2012
(51) Int. Cl.: F24J 2/54

(54) **Solarthermie-Heliostat**

(71) Anmelder: Wieghardt, Kai, 44869 Bochum (DE); Cordes, Sebastian, 51067 Köln (DE); Langenberg, Georg, 40225 Düsseldorf (DE); Prosinecki, Tobias, 52066 Aachen (DE)
(72) Erfinder: Cordes, Sebastian, 51067 Köln (DE); Prosinecki, Tobias, 52066 Aachen (DE)
(74) Vertreter: Patentanwälte ter Smitten Eberlein Rütten Partnerschaftsgesellschaft

(57) **Zusammenfassung**

Die Erfindung bezieht sich auf einen Solarthermie- Heliostaten (30) mit einem Spiegel (34) und einer festen horizontalen Primärachse (40), um die der Spiegel (34) kippbar ist. Der Primärachse (40) ist ein Linearantrieb (36), der einen Antriebsmotor (50) und ein selbsthemmendes Getriebe (52,54) aufweist, und ein dem Antriebsmotor (50) und/oder dem Getriebe (52,54) zugeordneter Impulsgeber (60) zur inkrementalen Kipppositions-Detektion zugeordnet. Ferner ist ein nicht-flüchtiger Spiegelpositionsspeicher (76) vorgesehen, der mit dem Impulsgeber (60) zur energielosen Speicherung der Kippposition des Spiegels (34) verbunden ist.

## Beschreibung

Die Erfindung bezieht sich auf einen Solarthermie-Heliostaten und auf eine Solarthermie-Anlage mit einem Heliostaten-Feld und einem Solarempfänger.

Bei einer Solarthermie- Anlage mit einem Heliostaten-Feld mit bis zu mehreren Tausend Heliostaten sind ein erheblicher Kostenfaktor die Herstellungskosten für die Heliostaten. Um die Kosten für die Aufstellung der Heliostaten beim Aufbau des Heliostaten-Feldes möglichst kein zu halten, werden die Heliostaten zwar an einer bestimmten Position im Feld, jedoch ohne eine gezielte mechanische rotatorischen Ausrichtung auf eine Sollausrichtung aufgestellt. Hierfür ist erforderlich, dass die Heliostaten eine feststehende vertikale Primärachse aufweisen, der ein Drehantrieb zugeordnet ist, der einen Rotationsbereich des Heliostaten- Spiegels um die vertikale Primärachse von mehr als 150° ermöglicht. Die Spiegel der zwischen der Mittagssonne und dem Solarempfänger stehenden Heliostaten müssen über ihre Horizontalposition hinaus kippbar sein, was einen Rotationsbereich von 360° erforderlich macht, wenn der horizontalen Sekundärachse ein preiswerter Linearantrieb zugeordnet ist, der prinzipbedingt den Kippbereich auf typisch 120° beschränkt. Allerdings muss bei einem derart beschränkten Kippbereich der Spiegel beim Passieren seiner Horizontalposition plötzlich um 180° rotiert werden, was eine entsprechend starke und schnelle Auslegung des Drehantriebs erforderlich macht.

Bei den Betriebskosten von Solarthermie-Anlagen fallen die elektrischen Energiekosten durchaus ins Gewicht, die unter anderem dadurch verursacht werden, dass jeder Heliostat immer mit elektrischer Energie versorgt werden muss, um die Spiegelposition nicht zu verlieren. Jeder Heliostat wird im Solarbetrieb jedoch nur ca. alle 20 Sekunden verstellt wird und im Nicht-Solarbetrieb zwischen Sonnenuntergang und Sonnenaufgang überhaupt nicht verstellt. Um ein Abschalten der elektrischen Energieversorgung ohne Verlust der Spiegelposition zu ermöglichen, werden hochpräzise Absolutwinkel-Geber verwendet, die den beiden Achsen zugeordnet sind. Andernfalls müssen bei Weglassen derartiger Absolutwinkel-Geber nach jedem Abschalten beim Wiedereinschalten Referenzfahrten vorgenommen werden.

Aufgabe der Erfindung ist es demgegenüber, einen preiswerten Solarthermie-Heliostaten und eine Solarthermie-Anlage mit einem preiswerten Feld von Heliostaten zu schaffen.

Diese Aufgabe wird erfindungsgemäß gelöst mit einem Solarthermie-Heliostaten gemäß Anspruch 1 und einer Solarthermie-Anlage mit einem Feld von Heliostaten gemäß Anspruch 9.

Der Solarthermie-Heliostat gemäß Anspruch 1 weist einen Spiegel mit einer ortsfesten horizontalen Primärachse auf, um die der Spiegel kippbar ist. Der Primärachse ist ein Linearantrieb zugeordnet. Durch Verwendung eines Linearantriebs für die horizontale Primärachse ist der Kippbereich des Spiegels zwar auf ca. 120° bis maximal 130° begrenzt. Allerdings ist ein Linearantrieb erheblich preiswerter als ein Drehantrieb, so dass hierdurch die Herstellungskosten eines Heliostaten erheblich reduziert werden. Für die Sekundärachse, die senkrecht zur Primärachse steht, ist der Rotationsbereich mechanisch auf weniger als 180° begrenzt, wenn die Sekundärachse und die Primärachse sich ungefähr hinter der Spiegelmitte kreuzen. Auch der Sekundärachse ist daher bevorzugt ein kostensparender Linearantrieb zugeordnet.

Zwar ergibt sich bei Verwendung eines Linearantriebs für beide Achsen anstelle eines Rotationsantriebs ein verringerter Schwenk- bzw. Rotationsbereich des Spiegels, jedoch wirkt sich dies jeweils nur auf die strahlungsschwächsten Phasen in der Nähe des Sonnenauf- und Sonnenuntergangs im Hochsommer aus. Die Wahl einer feststehenden ungefähr horizontalen Primärachse und einer dazu ungefähr senkrechten Sekundärachse ergibt eine Kinematik des Heliostaten- Spiegels, die dem Sonnenlauf viel ähnlicher ist als die Kinematik eines Heliostaten mit einer vertikalen Primärachse und einer horizontalen Sekundärachse. Unter "ungefähr" ist vorliegend eine Abweichung von maximal 10° zu verstehen. Hierdurch wird das Nachführen des Heliostaten- Spiegels vereinfacht und präzisiert. Die Achsen müssen im Mittel um kleinere Winkel und damit auch langsamer bewegt werden.

Da der Rotationsbereich des Spiegels konstruktiv begrenzt ist, sollte die Spiegelnormale des Heliostat- Spiegels in seiner rotatorischen Mittelposition beim Aufstellen des Heliostaten im Feld mehr oder weniger genau auf die rotatorische Sollrichtung ausgerichtet werden. Dieses rotationsgenaue Aufstellen der Heliostaten ist zwar kostspieliger als mit Heliostaten mit einer vertikalen 360°-Primärachse, jedoch ist dieser Mehraufwand erheblich geringer als die Einsparungen durch den Wegfall der Drehantriebe.

Der Linearantrieb der Primärachse und gegebenenfalls der Sekundärachse weist jeweils einen Antriebsmotor und ein selbsthemmendes Getriebe auf. Dem Antriebsmotor und/oder dem Getriebe ist ferner ein Impulsgeber zur inkrementalen Positions- Detektion zugeordnet. Ferner ist ein nicht-flüchtiger Spiegelpositionsspeicher vorgesehen, der mit dem Impulsgeber zur energielosen Speicherung der Position des Spiegels verbunden ist. Das selbsthemmende Getriebe stellt sicher, dass bei einer Abschaltung der Versorgungsenergie die mechanische Spiegelposition des Spiegels unverändert bleibt. Die letzte Spiegelposition vor der Abschaltung der Energieversorgung wird stets in dem Spiegelpositionsspeicher gespeichert. Der Spiegelpositionsspeicher ist technisch derart ausgebildet, dass er die letzte Spiegelposition ohne oder mit wenig elektrischer Energie speichert, so dass die Information über die Spiegelposition nach einem Abschalten der Energieversorgung für den Linearantrieb nicht verloren geht. Als Spiegelpositionsspeicher kommt insbesondere ein nicht-flüchtiger elektronischer Speicher in Frage, der relativ robust ist im Bezug auf große Temperaturunterschiede, Vibrationen, Feuchtigkeit, Staub etc. Derartige elektronische Speicher sind beispielsweise aus dem militärischen Bereich und dem Automobil- Bereich bekannt. Es kann grundsätzlich jedoch auch ein elektromechanischer Speicher vorgesehen werden, beispielsweise eine Festplatte. Wichtig ist in jedem Fall ein überschreibbarer, robuster, zuverlässiger und langlebiger Spiegelpositionsspeicher.

Durch den Einsatz eines nicht-flüchtigen Spiegelpositionsspeichers kann für die Koppelung der Spiegelposition ein relativ einfacher inkrementaler rotatorischer Impulsgeber eingesetzt werden, der bevorzugt weniger als 20 Impulse, und besonders bevorzugt weniger als 15 Impulse pro Eigenumdrehung abgibt. Der Impulsgeber ist möglichst antriebsmotornah an dem Antriebsmotor selbst bzw. dem angeschlossenen Getriebe angeordnet, um für eine möglichst feine Auflösung der Kipp- bzw. Rotationsbewegung des Spiegels einen möglichst gering auflösenden und damit preiswerten Impulsgeber einsetzen zu können. Auf einen Absolutwinkel-Geber kann auf diese Weise vollständig verzichtet werden, wodurch eine erhebliche Kosteneinsparung erzielt wird.

Vorzugsweise ist die Mittelpositions- Spiegelnormale um einen Winkel von mindestens 10° und höchstens 30° zur Vertikalen geneigt.

Gemäß einer bevorzugten Ausgestaltung ist der Antriebsmotor als Schrittmotor ausgebildet. Besonders bevorzugt ist die Auflösung des Schrittmotors höher als die des inkrementalen Impulsgebers, so dass die räumliche Spiegelposition mit einer höheren Auflösung angesteuert werden kann, als dies der Impulsgeber alleine erlauben würde.

Gemäß Anspruch 6 ist ein Solarthermie- Heliostat mit einem Spiegel, einem Turm und einer festen horizontalen Primärachse an dem oberen

Ende des Turms vorgesehen, um die der Spiegel kippbar ist. Der Primärachse ist ein Linearantrieb zugeordnet. Der Turm ist zur Vertikalen geneigt, wobei der Linearantrieb auf der stupfwinkligen Seite des Turms angeordnet und abgestützt ist. Der Grad der Neigung ergibt sich insbesondere aus der genauen Schwerpunktlage des Heliostaten, und sollte so gewählt werden, dass der mittlere Schwerpunkt des Heliostaten möglichst innerhalb des Turmfußes liegt. Um den Leistungsbedarf für den Primärachsen-Linearantrieb möglichst gering zu halten, sollte der Spiegel in Bezug auf die Primärachse möglichst schwerpunktnah gelagert sein. Da der Linearantrieb prinzipbedingt nicht schwerpunktneutral angeordnet sein kann, kann nur durch eine entsprechende Neigung des Turms zur Vertikalen der Schwerpunkt des Heliostaten in der Mitte des Turmfußes platziert werden.

Vorzugsweise ist der Heliostaten- Turm als sich nach oben verjüngend ausgebildet. Die größten auf den Heliostaten- Turm wirkenden Kräfte sind die sich aus der Windlast ergebenden Biege- und Drehmomente, die am Turmfuß mit Abstand am größten sind. Der Turmfuß muss also entsprechend dimensioniert sein, nicht jedoch der Bereich oberhalb des Turmfußes bis zur Primärachse, so dass dieser Bereich entsprechend schwächer dimensioniert werden kann. Besonders bevorzugt ist ein sich linear verjüngender Turm vorgesehen, der relativ einfach aus entsprechend vorgefertigten zugeschnittenen planen Stahlplatten hergestellt werden kann.

Vorzugsweise weist der Spiegel des Heliostaten eine derartige nicht-rechteckige Kontur auf, dass in der unteren Spiegelhälfte der Vertikalabstand des Spiegelrandes von der horizontalen Primärachse an den seitlichen Spiegelenden mindestens 10 %, und besonders bevorzugt mindestens 30 % kleiner ist als der Vertikalabstand in der Spiegelmitte. Wenn der Spiegel bezüglich beider Achsen in seiner Mittelposition steht, sind also die beiden unteren Eckbereiche des Spiegels abgeschrägt, ausgespart oder abgerundet. Auf diese Weise kann die Höhe der Primärachse erheblich reduziert werden, ohne dass die Gefahr besteht, dass die unteren Eckbereiche des Spiegels in bestimmten Spiegelpositionen tiefer liegen als der Turmfuß des Heliostaten- Turms, bzw. tiefer als es ein Sicherheitsabstand zum Erdboden zulässt. Durch eine reduzierte Turmhöhe wird die Stabilität eines Heliostaten verbessert bzw. sind die Kosten für den Heliostaten- Turm verringert.

Gemäß Anspruch 9 ist eine Solarthermie- Anlage mit einem Heliostaten-Feld und einem Solarempfänger vorgesehen. Das Heliostaten-Feld wird von mehreren identischen und auf den Solarempfänger nachgeführten Heliostaten gebildet. Jeder Heliostat weist einen Spiegel und eine feste horizontale Primärachse auf, um die der Spiegel kippbar ist. Der Primärachse ist bevorzugt ein Linearantrieb zugeordnet. Die Spiegelnormale des Spiegels in seiner Kipp- Mittelposition ist mindestens um 10° zur Vertikalen geneigt. In dem Heliostaten-Feld ist zwischen dem Solarempfänger und dem nächsten Erdpol, beispielsweise dem Nordpol bei einer Anlage auf der nördlichen Erd-Halbkugel, eine Umschlaglinie definiert, die um mindestens einen Heliostaten beabstandet ist zu dem Solarempfänger.

Die Umschlaglinie ist bevorzugt leicht bogenförmig und länger als ein Vielfaches einer Spiegelbreite. Bevorzugt kreuzen sich eine gedachte Linie zwischen dem Solarempfänger und dem nächsten Erdpol einerseits und die Umschlaglinie andererseits ungefähr rechtwinklig.

Auf der erdpolzugewandten Seite wie auch auf der erdpolabgewandten Seite der Umschlaglinie ist jeder Heliostat derart rotatorisch orientiert angeordnet, dass die betreffende Mittelpositions- Spiegelnormale jeweils in Richtung der Umschlaglinie orientiert ist. Die Heliostaten-Spiegelnormalen des polseitigen Teilfeldes sind also ungefähr in Richtung des Solarempfängers orientiert, wenn auch nicht notwendigerweise genau auf diesen gerichtet. Die Heliostaten- Spiegel in dem im Bezug auf die Umschlaglinie polabgewandten Teilfeld sind ebenfalls in Richtung der Umschlaglinie orientiert, d.h. ungefähr in Richtung des nächstgelegenen Erdpols orientiert, wenn auch nicht notwendigerweise genau auf diesen gerichtet. Die solarturmnahen und polabgewandt des Solarempfängers stehenden Heliostaten haben mit ihrer Mittelposition- Spiegelnormalen eine annähernd entgegengesetzte Orientierung zu der Orientierung der Mittelpositions- Spiegelnormalen der im Bezug auf die Umschlaglinie polzugewandt aufgestellten Heliostaten.

Mit dieser zweigeteilten Orientierung des Heliostaten-Feldes kann mit preiswerten Heliostaten, bei denen die Primärachse eine Horizontalachse ist, die bevorzugt durch einen preiswerten Linearantrieb angetrieben wird, durch den der Kippbereich in der Regel auf ca. 120° bis maximal 130° beschränkt ist, dennoch ein Heliostaten-Feld definiert werden, das eine sehr hohe Verfügbarkeit aufweist.

Im Folgenden wird unter Bezugnahme auf die Zeichnungen ein Ausführungsbeispiel der Erfindung näher erfäutert.

Es zeigen:
Figur 1 eine Solarthermie- Anlage mit einem Heliostaten- Feld, bestehend aus mehreren annähernd identischen Heliostaten, und einem Solarempfänger,
Figur 2 einen Heliostaten der Solarthermie- Anlage der Figur 1 in Seitenansicht,
Figur 3 den Heliostaten der Figur 2 in Rückansicht, und
Figur 4 eine schematische Darstellung des Getriebes und der Heliostaten-Steuerung eines Heliostaten der Figuren 1-3.

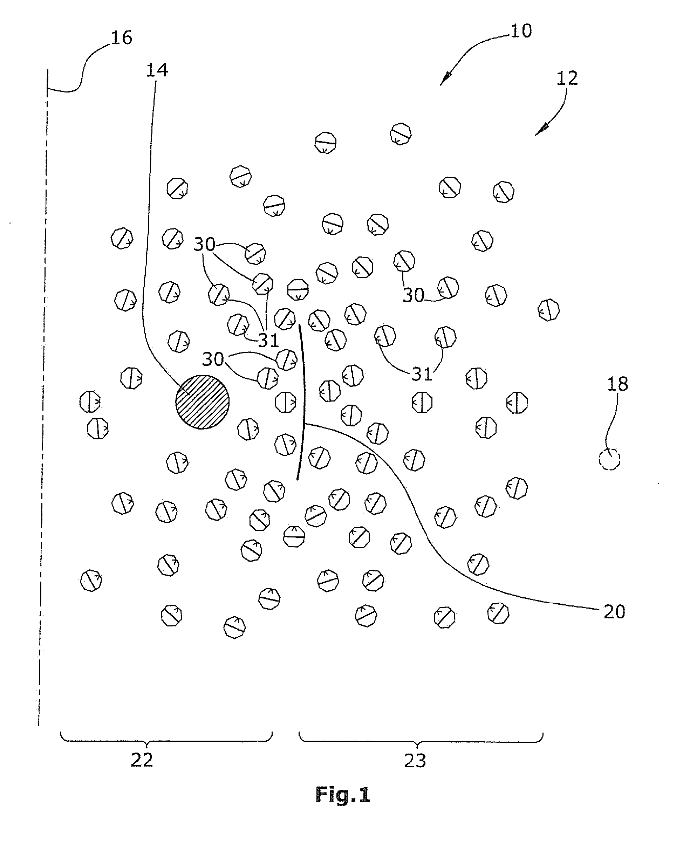

In der Figur 1 ist schematisch eine Solarthermie- Anlage 10 in Draufsicht dargestellt, die im Wesentlichen von einem Heliostaten- Feld 12 mit einer

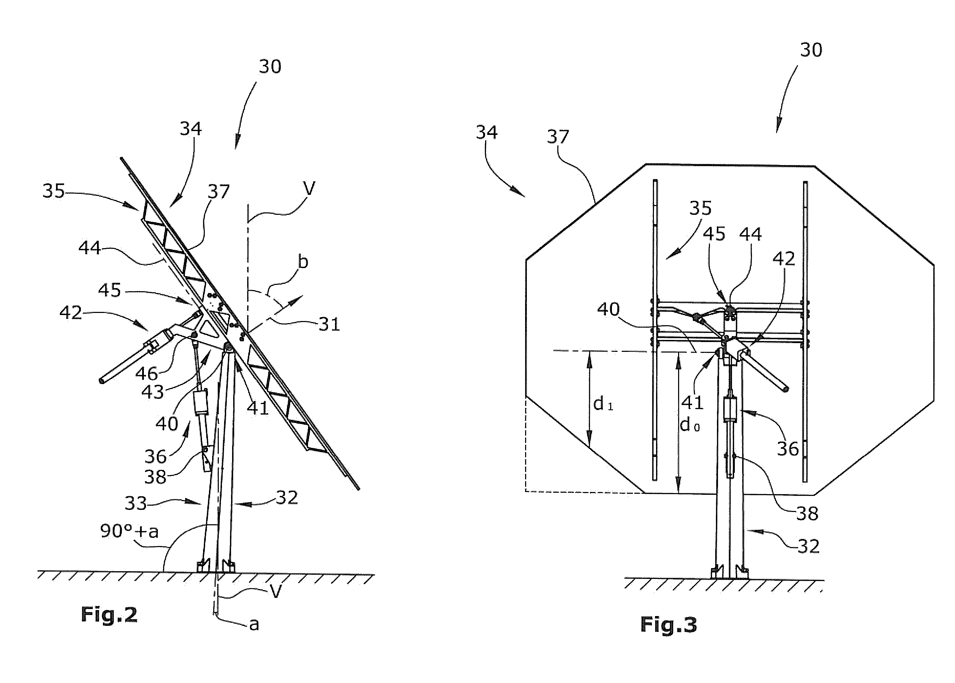

Vielzahl annähernd identischer Heliostaten 30 und einem Solarempfänger 14 gebildet wird. Zu der Solarthermie- Anlage gehört grundsätzlich noch eine Generatorstation (nicht dargestellt), in der die gewonnene Wärmeenergie in elektrische Energie umgewandelt wird, und ein Wärmespeicher, in dem eine erwärmte Wärmeträger- Flüssigkeit, beispielsweise Salzschmelze, gespeichert werden kann. In den Figuren 2 und 3 ist exemplarisch ein einziger Heliostat 30 des Heliostaten-Feldes 12 dargestellt. Die Heliostaten 30 in den Heliostaten-Feld 12 unterscheiden sich im Wesentlichen lediglich durch die Höhe des jeweiligen Turms 32 des Heliostaten 30 und durch die rotatorische Orientierung ihrer Mittelpositions-Spiegelnormalen 31.

Jeder Heliostat 30 weist einen nicht-vertikalen Turm 32 auf, der beispielsweise einen gleichseitig sechseckigen Querschnitt aufweist und der als sich nach oben hin verjüngender Turm ausgebildet ist. Der Turm 32 ist mit einem Winkel a zur Vertikalen V geneigt. Der Winkel a beträgt wenige Grad bis zu maximal 20°. Am oberen Ende des Turms 32 wird durch ein Primärachsen-Gelenk 41 eine feststehende horizontale Primärachse 40 definiert, um die der Heliostaten- Spiegel 34 bzw. ein den Spiegel 34 tragendes Spiegelgelenkchassis 43 kippbar angeordnet ist. Das Spiegelgelenkchassis 43 weist in Bezug auf den Spiegel 34 ein Sekundärachsen-Gelenk 45 auf, dass eine Sekundärachse 44 definiert, um die der Spiegel 34 im Bezug auf das Spiegelgelenkchassis 43 rotiert werden kann. Die Sekundärachse 44 steht senkrecht zu der Primärachse 40.

Der Primärachse 40 ist ein Linearantrieb 36 zugeordnet, der auf der stupfwinkligen Seite 33 des Heliostaten- Turms 32 über ein turmseitiges Antriebs-Gelenk 38 angelenkt ist. Das chassisseitige Gegengelenk 46 des Linearantriebs 36 ist an dem Spiegelgelenkchassis 43 angeordnet. Auch der Sekundärachse 44 bzw. dem Sekundärachsengelenk 45 ist ein Linearantrieb 42 zugeordnet, der mit seinem einen Längsende an dem Spiegelgelenkchassis 43 und auf der anderen Seite an einem Spiegelrahmen 35 des Spiegels 34 gelenkig angelenkt ist. Der Spiegel 34 wird von dem Spiegelrahmen 35 und einer Spiegelscheibe 37 gebildet, die von dem Spiegelrahmen 35 getragen wird. Durch die Verwendung eines reinen Linearantriebs 36,42 für die Primärachse 40 und die Sekundärachse 44 ist der Kippbereich bzw. der Rotationsbereich für den Spiegel 34 jeweils auf maximal 130° beschränkt.

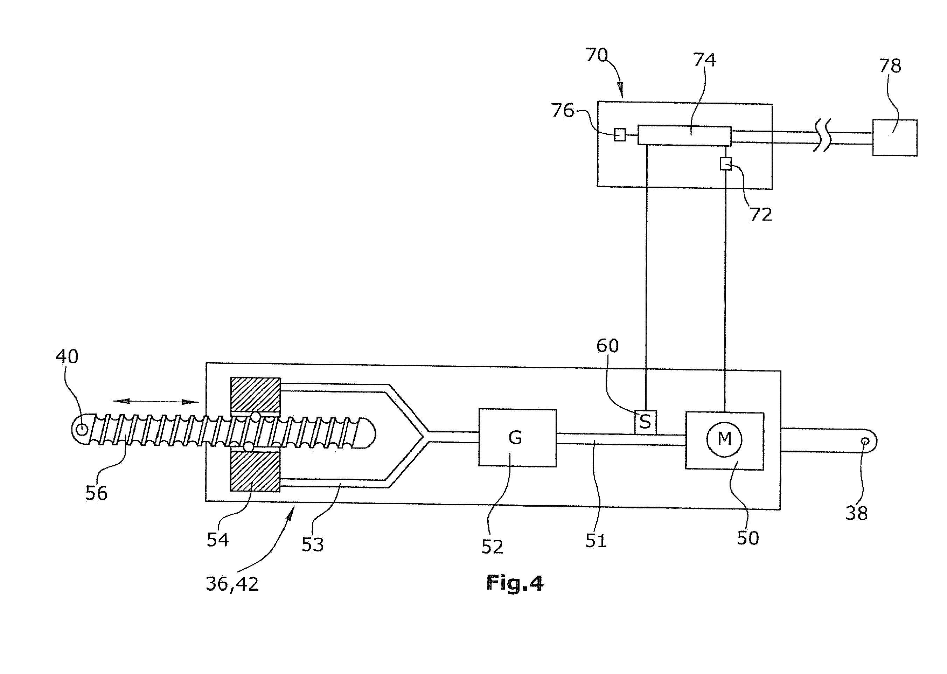

Der Linearantrieb 36,42 ist in der Figur 4 schematisch dargestellt. Der Linearantrieb 36,42 weist einen Antriebsmotor 50 auf, der als Schrittmotor ausgebildet ist. Der Motorwelle 51 des Antriebsmotors 50 ist ein rotatorischer Impulsgeber 60 zugeordnet, der pro Eigenumdrehung 15 Impulse abgibt, also eine Auflösung von 24° hat. Der Impulsgeber kann auf jeder der folgenden rotatorischen Getriebestufen angeordnet sein. Die Motorwelle 51 ist mit einem Zahnrad-Getriebe 52 verbunden, das als mehrstufiges Untersetzungsgetriebe ausgebildet ist. Die Getriebewelle 53 des Zahnrad-Getriebes 52 treibt eine Spindelmutter 55 eines Gewindespindel-Getriebes 54 an. Die Spindelmutter 55 des Schneckenrad-Getriebes 54 treibt wiederum eine Gewindespindel 56 an. Eine der Getriebestufen ist selbsthemmend ausgebildet, so dass bei Stillstand des Antriebsmotors 50 die Gewindespindel 56 blockiert ist, und sich linear nicht bewegen kann. Hierdurch wird sichergestellt, dass sich die Spiegelposition bei energielosem Antriebsmotor-Stillstand nicht verändern kann.

Zum Steuern und Regeln des Linearantriebs 36,42 ist eine Heliostaten-Steuerung 70 vorgesehen, die über elektrische Versorgungsleitungen mit einer zentralen Betriebsenergie-Quelle 78 verbunden ist. Mehrere oder alle Heliostaten 30 des Heliostaten-Feldes 12 sind mit der zentralen Elektroenergie-Quelle 78 verbunden. Die Heliostaten- Steuerung 70 weist einen Prozessor 74, eine Motorsteuerung 72 und einen nicht-flüchtigen Spiegelpositionsspeicher 76 auf. Die Motorsteuerung 72 ist über Versorgungs- und Steuerungsleitungen mit dem Antriebsmotor 50 verbunden. Der Prozessor 74 ist über entsprechende Datenleitungen direkt mit dem Impulsgeber 60 des Linearantriebs 36,42 verbunden. Die Heliostaten- Steuerung 70 ist ferner mit einer nicht dargestellten zentralen Anlagensteuerung verbunden, von der die Heliostaten- Steuerung 70 Befehle zur genauen räumlichen Positionierung des Heliostaten- Spiegels 34 empfängt. Die Anlagensteuerung kann räumlich und funktionell mit der Betriebsenergie-Quelle 78 zusammengelegt sein.

Nach der Montage der Heliostaten 30 in dem Heliostaten-Feld 12 wird jeder Heliostat 30 kalibriert, so dass in dem Spiegelpositionsspeicher 76 die exakte räumliche Position des Spiegels 34 gespeichert ist. Wenn die Heliostaten- Steuerung 70 von der Anlagensteuerung eine neue Sollposition empfängt und die elektrische Energiequelle 78 mit der Heliostaten- Steuerung verbunden ist, veranlasst ein in dem Prozessor 74 laufendes Steuerungsprogramm die Motorsteuerung 72 den Antriebsmotor 50 zu einer entsprechenden Anzahl von Motorschritten. Gleichzeitig wird über den Impulsgeber 60 die Veränderung der Linearposition des betreffenden Linearantriebs erfasst, und wird die in dem Spiegelpositionsspeicher 76 gespeicherte Ist- Kippposition bzw. Ist-Rotationsposition des Spiegels 34 kontinuierlich entsprechend angepasst. Sobald die Ist-Position des Spiegels 34 der übermittelten Sollposition entspricht, wird der Antriebsmotor 50 nicht mehr mit elektrischer Energie versorgt, so dass die Betriebsenergie-Quelle 78 sogar abgeschaltet bzw. abgetrennt werden kann. Der Spiegelpositionsspeicher 76 ist vorliegend nicht-flüchtig und rein passiv ausgestaltet, so dass die gesamte Energieversorgung für die Heliostaten- Steuerung 70 abgeschaltet werden kann, ohne dass hierdurch die gespeicherte Spiegelpositions-Information verloren geht.

Da der Spiegel 30 durch die ausschließliche Verwendung eines Linearantriebs 36,42 für die Primärachse 40 und die Sekundärachse 44 einen auf typisch ca. 120°, maximal 130°, beschränkten Kipp- bzw. Rotationsbereich hat, weist der Spiegel 34 in seiner auf beide Achsen bezogenen Mittelposition eine Spiegelnormale 31 auf, die um einen Winkel b zur vertikalen V geneigt ist, wobei der Winkel b zwischen 10° und 30° liegt und im Wesentlichen von der geografischem Breite des Anlagen-Standortes abhängt.

Das in der Figur 1 dargestellte Heliostaten-Feld 12 der Solarthermie-Anlage 10 ist ausschließlich oder wenigstens im Wesentlichen mit den vorbeschriebenen Heliostaten 30 ausgestattet, die jeweils eine nichtvertikale Mittelpositions- Normale 31 aufweisen. Das Heliostaten-Feld 12 weist zwischen dem Solarempfänger 14 und dem nächstgelegenen Erdpol 18 eine virtuelle Umschlaglinie 20 auf, die nicht geradlinig sondern leicht gebogen ist. Die Umschlaglinie 20 teilt das Heliostaten-Feld 12 in zwei Teilfelder 21,23, nämlich in ein polnahes Teilfeld 23 zwischen der Umschlaglinie 20 und dem nächsten Erdpol und ein polfernes Teilfeld 22 zwischen der Umschlaglinie und dem Äquator 16. Die Mittelpositions-Spiegelnormalen 31 beider Teilfelder 23,22 sind auf die umschlaglinie 20 gerichtet, so dass die Spiegelnormalen 31 der Heliostaten 30 des polnahen Teilfeldes 23 ungefähr in Richtung des Solarempfängers 14 geneigt und gerichtet sind, wohingegen die Spiegeinormalen 31 der Heliostaten 30 des polfernen Teilfeldes 22 ungefähr in Richtung des nächsten Erdpols 18 gerichtet sind. Auf diese Weise wird trotz des beschränkten Kipp- und Rotationsbereichs der verwendeten Heliostaten 30 eine hohe theoretische Verfügbarkeit des Heliostaten-Feldes 12 realisiert.

## Patentansprüche

1. Solarthermie- Heliostat (30) mit einem Spiegel (34) und einer festen ungefähr horizontalen Primärachse (40), um die der Spiegel (34) kippbar ist,
wobei der Primärachse (40) ein Linearantrieb (36), der einen Antriebsmotor (50) und ein selbsthemmendes Getriebe (52,54) aufweist, und ein dem Antriebsmotor (50) und/oder dem Getriebe (52,54) zugeordneter Impulsgeber (60) zur inkrementalen Kipppositions- Detektion zugeordnet ist, und
wobei ein nicht-flüchtiger Spiegelpositionsspeicher (76) vorgesehen ist, der mit dem Impulsgeber (60) zur energielosen Speicherung der Kippposition des Spiegels (34) verbunden ist.

2. Solarthermie- Heliostat (30) nach Anspruch 1, wobei die Mittelpositions-Spiegelnormale (31) um einen Winkel (b) von mindestens 10° zur Vertikalen (V) geneigt ist.

3. Solarthermie- Heliostat (30) nach einem der vorangegangenen Ansprüche, wobei der Impulsgeber (60) eine Auflösung von weniger als 20 Impulsen, besonders bevorzugt von weniger als 15 Impulsen pro Eigenumdrehung aufweist.

4. Solarthermie- Heliostat (30) nach einem der vorangegangenen Ansprüche, wobei der Antriebsmotor (50) ein Schrittmotor ist.

5. Solarthermie- Heliostat (30) nach einem der vorangegangenen Ansprüche, wobei der Spiegelpositionsspeicher (76) ein elektronischer Speicher ist.

6. Solarthermie- Heliostat (30) mit einem Spiegel (34), einem Turm (32) und einer festen horizontalen Primärachse (40) an dem oberen Ende des Turms (32), um die der Spiegel (34) kippbar ist, wobei der Primärachse (40) ein Linearantrieb (36) zugeordnet ist,
der Turm (32) zur Vertikalen (V) geneigt ist, und
der Linearantrieb (36) auf der stumpfwinkeligen Seite (33) des Turms (32) angeordnet und abgestützt ist.

7. Solarthermie- Heliostat (30) nach Anspruch 6, wobei der Turm (32) sich nach oben verjüngend ausgebildet ist.

8. Solarthermie- Heliostat (30) nach Anspruch 6 oder 7, wobei der Spiegel (34) eine derartige nicht-rechteckige Kontur aufweist, dass in der unteren Spiegelhälfte der Vertikalabstand (d1) des Spiegelrandes von der Primärachse (40) an den seitlichen Spiegelenden mindestens 10%, besonders bevorzugt mindestens 30% kleiner ist als der Vertikalabstand (d0) in der Spiegelmitte.

9. Solarthermie- Anlage (10) mit einem Heliostaten-Feld (12) und einem Solarempfänger (14), wobei
das Heliostaten-Feld (12) von mehreren identischen und auf den Solarempfänger nachgeführten Heliostaten (30) gebildet wird,
jeder Heliostat (30) einen Spiegel (34) und eine feste horizontale Primärachse (40) aufweist, um die der Spiegel (34) kippbar ist,
der Primärachse (40) ein Linearantrieb (36) zugeordnet ist,
die Mittelpositions- Spiegelnormale (31) mindestens um 10° zur Vertikalen (V) geneigt ist,
zwischen dem Solarempfänger (14) und dem nächsten Erdpol (18) und beabstandet zu dem Solarempfänger (14) eine Umschlaglinie (20) definiert ist, und
die Mittelpositions- Spiegelnormalen (31) aller Heliostaten (30) ungefähr in Richtung der Umschlaglinie (20) orientiert sind.

10. Solarthermie- Anlage (10) nach Anspruch 9, wobei die Umschlaglinie (20) und die Linie zwischen dem Solarempfänger (14) und dem nächsten Erdpol (18) sich rechtwinklig kreuzen.
